# EUROPEAN PATENT SPECIFICATION

(11) **EP 1 520 479 B1**
(45) Date of publication and mention of the grant of the patent: **07.11.2012**
(21) Application number: 04104751.5
(22) Date of filing: 29.09.2004
(51) Int. Cl.: A22B 7/00, A23J 1/00, A23J 1/10, A23J 3/32

(54) **Ensilage apparatus**
Siliervorrichtung
Appareil pour l'ensilage

(30) Priority: 30.09.2003 FI 20031408
(43) Date of publication of application: 06.04.2005
(73) Proprietor: Oy Petsmo Products Ab, 65230 Vasa (FI)
(72) Inventor: Granlund, Sture, 65280 Vasa (FI)
(74) Representative: Niemi, Hakan Henrik

(56) References cited:
- US-A- 5 076 504
- US-A- 5 713 788

## Description

### FIELD OF THE INVENTION

The present invention relates to an ensilage apparatus intended for mobile use in particular in accordance with the preamble of claim 1.

### PRIOR ART

Industrial production of animal foodstuff, such as hens' eggs, is at present mostly located in units with a large number of animals - placed in cages or more frequently in farms provided with relatively wide free surfaces.

Irrespective of how animals spend their active lives, the farmer occasionally has to put animals to death owing to an ever decreasing productivity. For example, the egg production of hens decreases after a few years of life. The carcass of the animal put to death thus represents a form of waste that has to be destroyed in order not to spread diseases, such as botulism. The termination can be carried out at a destruction site, to which a larger number of gathered animals are transported to be put to death and destroyed. Owing to more and more restricted regulations relating to the protection of animals, it is becoming increasingly common to put the animals to death on respective farms. For this purpose, particular termination units call on the farms, where the animals are usually put to death by placing them in a gas-filled container. After the termination procedure the animal carcasses are transported to a particular destruction site to be further destroyed.

However, the prior art solutions for terminating animals imply that in addition to a considerable cost for the farmer an attractive raw material of high quality for the foodstuff industry is destroyed. The carcasses of the animal put to death could be utilized especially to produce fodder for the fur animal industry.

Besides the problems described above significant problems may be caused on animal farms, for instance, if a serious infection occurs. What is often required to prevent such an infection from spreading to neighbouring farms or production plants is that one or more animals are put to death. However, the transportation of infected animals involves many problems as the aim is to simultaneously prevent the infection from spreading outside the affected farm. Then again, it is often impossible to begin slaughtering infected animals extensively on the farm in question.

### BRIEF DESCRIPTION OF THE INVENTION

The present invention substantially allows avoiding the problems associated with the known solutions. The object of the invention is therefore to provide an apparatus by which the animals to be terminated previously considered as problem waste can be taken care of in a manner that satisfies both the farmer and different governmental and municipal authorities.

This object is achieved in accordance with the invention by providing the invention with the characteristics indicated in claim 1. The following dependent claims disclose appropriate further developments and respective variations of the inventions that further improves the function thereof.

The invention is based on the idea that the termination of animals as well as the initial destructive working stages should be carried out on the farm concerned. The animals can thus be spared from a painful transportation, and at the same time the chances to utilize the offal to best possible effect can be secured. Avoiding transportation of animals to be slaughtered also allows minimizing the eventual spreading of diseases. In order to be able to carry out this work economically the present mobile apparatus, which is movable from one farm to another without any problems, has been provided.

In the following specification the expressions "up", "down", "outside", "inside" and the like indicate directions in relation to the ensilage apparatus or the structural details thereof as shown in the accompanying Figures.

The apparatus described in the present invention provides several significant advantages over the prior art. Thus, the construction of the ensilage apparatus on a mobile base means that the transportation thereof from one working place to another can be carried out in good hygienic conditions. The mobile base also entails that the working conditions can be optimized and standardized.

The apparatus according to the invention is very efficient and assists in putting animals painlessly to death without strenuous or even painful transportations.

The present ensilage apparatus also allows to rapidly handle locally on a farm or breeding establishment a much larger number of animals than before.

What can be prevented with an invention of the present type is that animals, which have previously died a natural death, should accidentally be among the final ensilage material. Consequently the use of a detrimental material during ensiling can effectively be avoided.

The invention allows an easy and fast follow-up to be carried out concerning the quality of the animal carcasses to be handled in the apparatus.

Utilizing infrared temperature measuring allows to rapidly obtain reliable measurement results. When such a measurement method is utilized, the direct contact with the animal carcasses in the apparatus can be avoided, thus making the arrangement more durable.

Additional advantages and details of the invention are explained in detail in the following specification.

### BRIEF DESCRIPTION OF THE DRAWINGS

In the following, a preferred embodiment of the invention is explained with reference to the drawing, in which
Figure 1 shows a side view of an alternative embodiment of the present apparatus, in which the apparatus is made mobile by implementing the apparatus as an superstructure to a truck trailer,

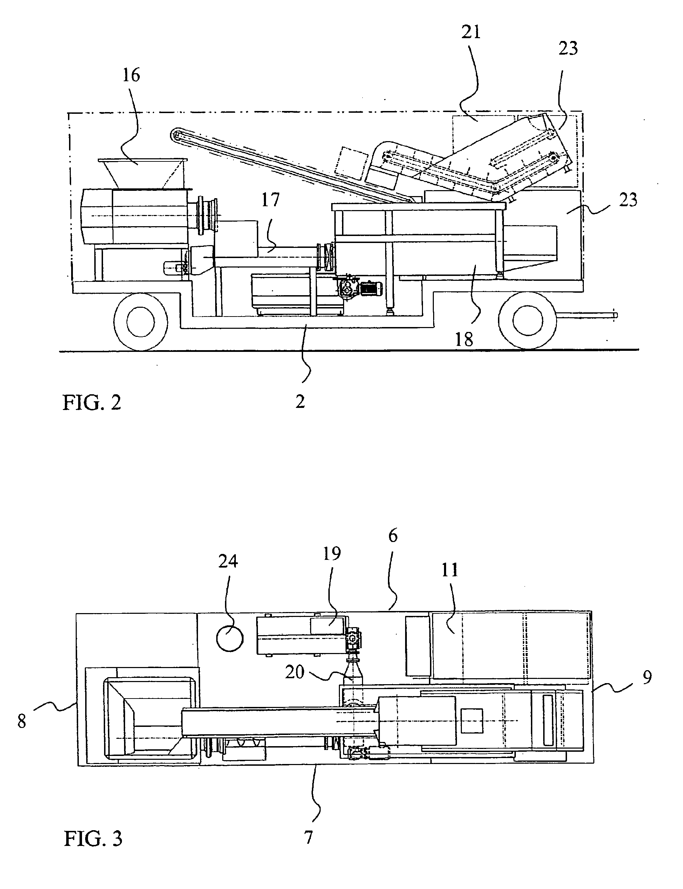

Figure 2 shows an apparatus in cross section with all the parts thereof placed on a truck trailer,
Figure 3 shows a top view of the apparatus shown in Figure 2, in which the roof of the apparatus has been removed to provide a better view of the structure,
Figure 4 shows a top view of an apparatus and opened out for use, in which the roof of the apparatus has been removed to provide a better view of the structure,
Figure 5 shows a cross section of the apparatus shown in Figure 4,

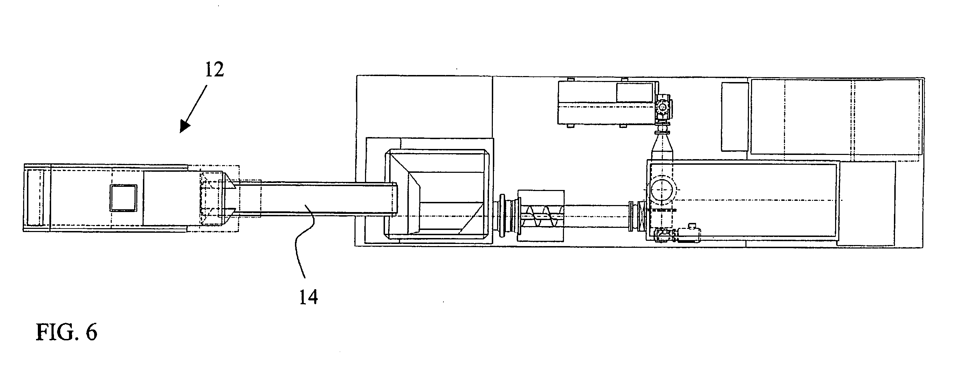

Figure 6 shows a top view of an apparatus and opened out in an alternative implementation, in which the roof of the apparatus has been removed to provide a better view of the structure,
Figure 7 shows a side view of the apparatus shown in Figure 6, in which the roof and the walls of the apparatus have been removed to provide a better view of the structure,
Figures 8 to 13 illustrate how the apparatus is applied, in which

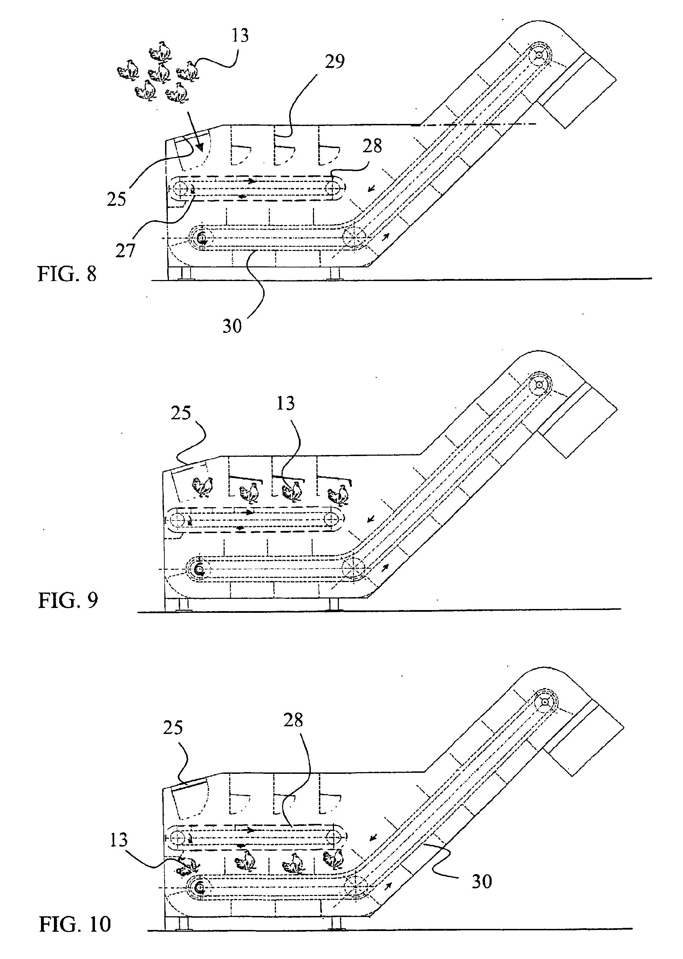

Figure 8 shows how animals are brought into a termination unit,
Figure 9 shows how animals are put to sleep in the termination unit,

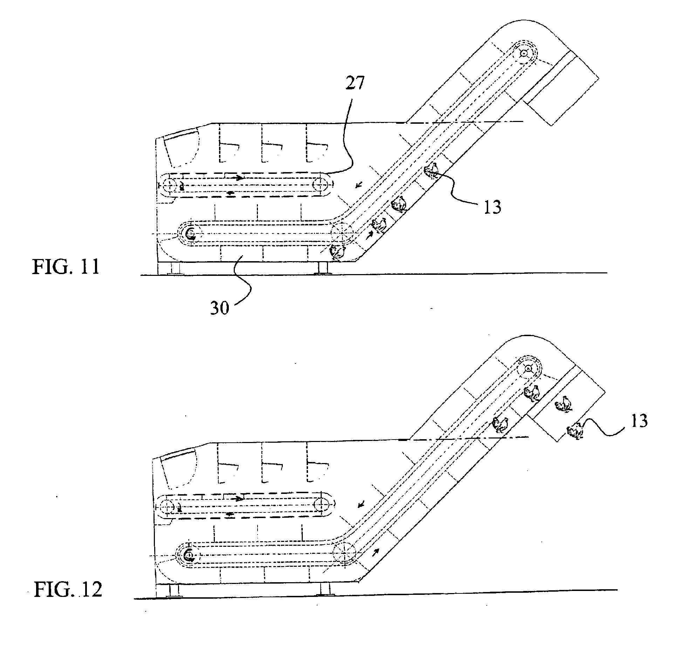

Figure 10 and 11 show how animals are put to death in the termin a-tion unit,
Figure 12 show how terminated animals are removed from the termination unit, and

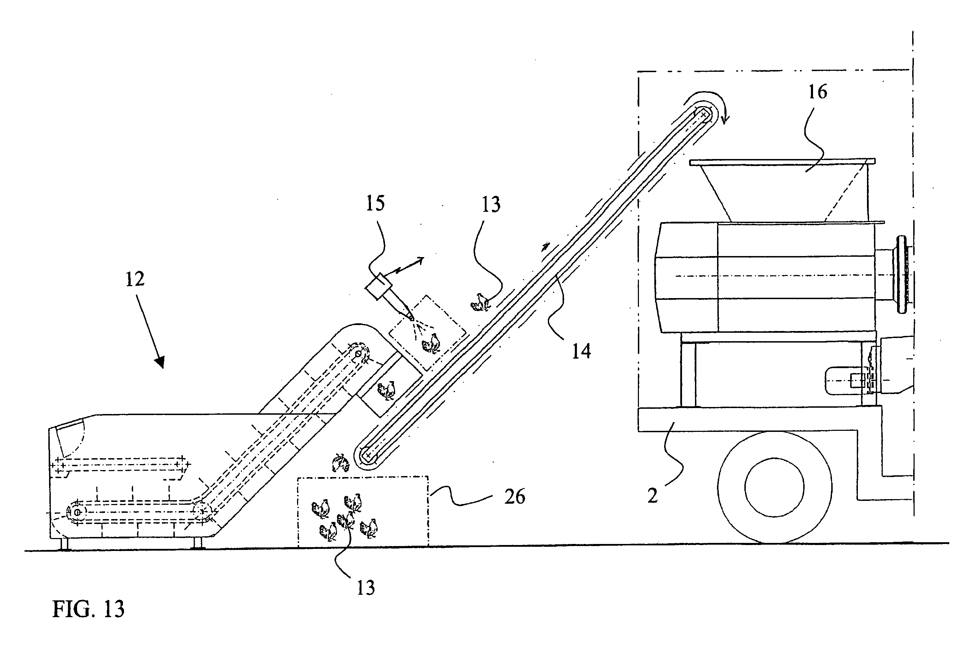

Figure 13 show how the temperature of the animal carcasses is recorded for regulating the operation of a conveyor element.

### DESCRIPTION OF THE PREFERRED EMBODIMENT

A preferred embodiment of an ensilage apparatus is described in the following with reference to the above Figures. In this context the solution comprises the structural parts shown in the Figures, each one being indicated with respective reference numerals. The reference numerals correspond with the reference numerals indicated in the specification rendered below.

An ensilage apparatus 1 according to the present specification comprises a mobile and complete unit that can be driven from one farm to another in order to finish off one or more animals and to produce ensilage material thereof.

In order to be able to easily move the ensilage apparatus, the apparatus is provided with a framework 2. The framework can be formed of a frame that can be loaded on a truck in a manner known per se, or the frame may as shown in the present Figures comprise a framework of a truck trailer 3. This allows coupling the apparatus to any towcar 4 in order to move the apparatus from one poultry farm to another.

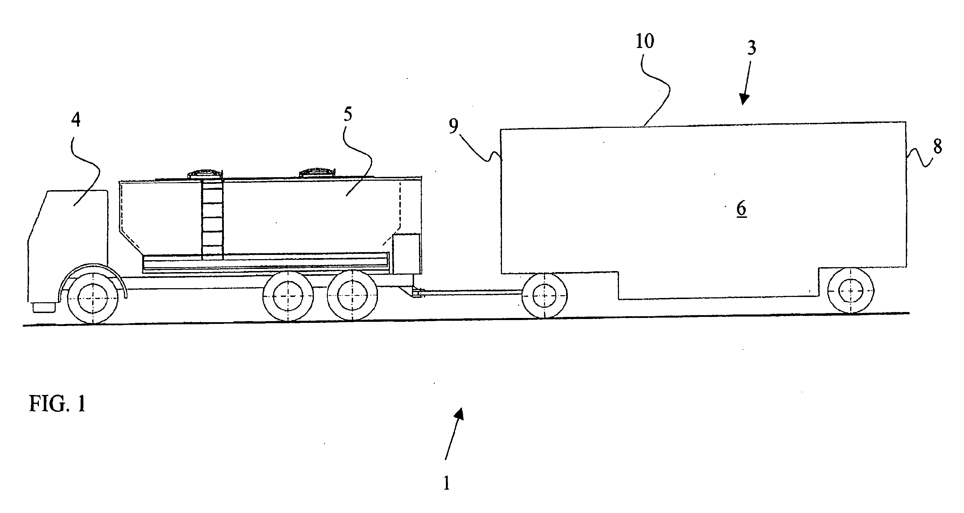

In an application according to Figure 1 the ensilage apparatus 1 thus also includes a towcar 4, which is preferably a standard structured truck provided with a fodder tank 5, which can be provided with what is known as multilift fastening. The fodder tank shown in the Figure has basically the same structure that any modern fodder kitchen employs to drive processed fodder to the customers thereof.

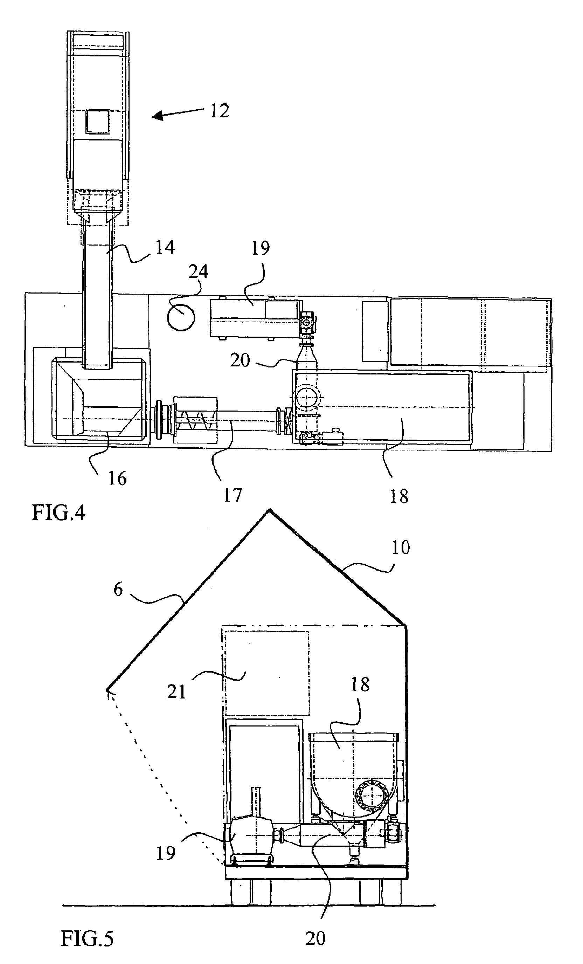

In the structure according to the accompanying Figures the ensilage apparatus comprises a framework 2, the dimensions and handling characteristics of which comply with the national legislation. The framework includes a superstructure comprising a body provided with side walls 6 and 7, gable walls 8 and 9 and a roof 10 made of easily washable elements. One of the side walls 6 can preferably be lifted hydraulically so that it simultaneously functions as a protective roof during operation. In accordance with Figure 5, the roof 10 of the body may follow when lifted in order to increase the operational height within the body. The rear gable 8 of the body is also preferably completely openable towards the side. On account of this structure the framework forms together with the superstructure thereof a trailer 3, which can be completely closed during transportation.

The accompanying Figures show an embodiment of the ensilage apparatus 1, by means of which laying hens in particular are put to death and pre-processed. However, there is no reason why the apparatus could not be utilized to finish off other animals than hens indicated herein as well if provided with minor alterations regarding the technical equipment and alterations regarding the dimensions of the machines and the placement thereof.

The active components of the ensilage apparatus 1 are therefore placed on the framework 2 mentioned above in such a manner that they remain completely inside the roof and walls thereof during transportation of the trailer. In the following, the essential components in the ensilage apparatus have at first been described briefly in the same order in which they have been used when terminating animals on a farm, and thereafter the function of the ensilage apparatus and the particular structural details thereof are presented in more detail.

Thus, the ensilage apparatus 1 preferably comprises an electric generator 11 for producing all the electric power the ensilage apparatus requires. The generator makes the apparatus independent of external power sources, which is important as it is not evident that all places of work are provided with a sufficient amount of electric power.

What is firstly encountered when employing the present ensilage apparatus is a termination unit 12. This unit preferably comprises a CO₂ gas termination unit. The termination unit and the function thereof are described in more detail below.

In order to convey carcasses 13 of the dead animals further to be processed the carcasses are placed on a conveyor element 14. An apparatus 15 is arranged to or at the conveyor element for measuring the temperature of the animal carcasses when they pass a measuring point provided in the conveyor element.

The animal carcasses are taken by means of the conveyor element to a grinder 16 in which they are ground into appropriately coarse pieces in order to be forwarded by a conveyor 17, preferably a screw conveyor, from the grinder to a mixer 18 for processing the ground material.

The material that has at this stage been properly ground and pre-processed is forwarded from the mixer to a pump unit 19 provided with an additional conveyor 20, preferably a screw conveyor. This arrangement conveys the pre-processed material to an outer store. Such a store may, for instance, be the fodder tank 5 mentioned above.

In order to serve all the different parts of the ensilage apparatus 1, the apparatus comprises among other things acid containers 21 and 22 for the chemicals required for processing the material ground into pieces. An acid pump 23 is also provided for conveying the acids from the respective containers to the mixer and also a storage tank 24 for the CO₂ gas used in the termination unit 12.

A measuring apparatus for establishing the CO₂ concentration is arranged to supervise the termination unit 12 while the measuring apparatus for establishing the weight of the ground and processed material is arranged to the mixer 18.

The pH content of the ground and processed material is arranged to be established with a measuring apparatus suitable for the purpose.

Finally the required additional equipment can be mentioned, such as a switchboard with a control desk, a hydraulic aggregate, a foam-extinguishers, high-pressure cleaning equipment etc.

For a better understanding of the present ensilage apparatus 1 and the structure thereof the apparatus is explained in the following by describing the function of the ensilage apparatus.

A transportation unit that in accordance with Figure 1 comprises a towcar 4 and a trailer 3 with an ensilage apparatus 1 constructed thereto is driven as any other delivery vehicle for instance to a poultry farm.

At the poultry farm the trailer 3 is placed as close as possible to the henhouse (animal shelter). The trailer is uncoupled from the towcar 4 and the electric aggregate 11 is started. The side wall(s) of the trailer and possibly the roof 10 are opened for instance using hydraulic pressure so that at least one long side 6 will form a protective roof during the continuous work. Cf. Figure 5. When the trailer is opened the termination unit 12 can be taken down from the transportation position thereof and placed into the position in which it is supposed to be put in when the animals are put to death and during the further processing of the animal carcasses 13. A gas flow is switched on and the gas is led to the substantially air-tight termination unit. When animals are put to death carbon dioxide (CO₂) is preferably used. A specific measuring apparatus is used to ensure that the gas concentration inside the termination unit exceeds the statutory amount (usually 50%). All the other functions of the ensilage apparatus are controlled by making a test start in the respective apparatus.

It is naturally possible to use other methods known in the art to painlessly put animals to death. If the animal carcasses are not intended to be utilized as for instance raw material for fodder, no conditions are placed upon for instance the poison concentrations in the gas, instead any gas used within the specific field mentioned may replace the CO₂ gas concerned.

The ensilage apparatus 1 is started now in its entirety and the first hens (animals) 13 are placed, for instance by hand in the closed termination unit 12, cf. Figure 8. The hens are in accordance with Figure 9 lead in through a filling opening 25, which is preferably manoeuvred by means of a mechanical foot pedal (not shown), an electric interrupter or in another corresponding manner that does not necessarily require to be worked by hand. In order to adjust the operation of the termination unit a test is at first carried out with for instance 20 hens, whereby the apparatus 15 included in the termination unit for measuring the temperature of the animal carcasses is calibrated. At the same time, it is checked that the apparatus 15 communicates with a manoeuvring unit arranged to manoeuvre at least the operation of the termination unit and the conveyor element 14. In order to assure oneself of the operation of the termination unit, said unit is also tested with a so-called dummy bird in order to make sure that a temperature stop provided in the ensilage apparatus functions.

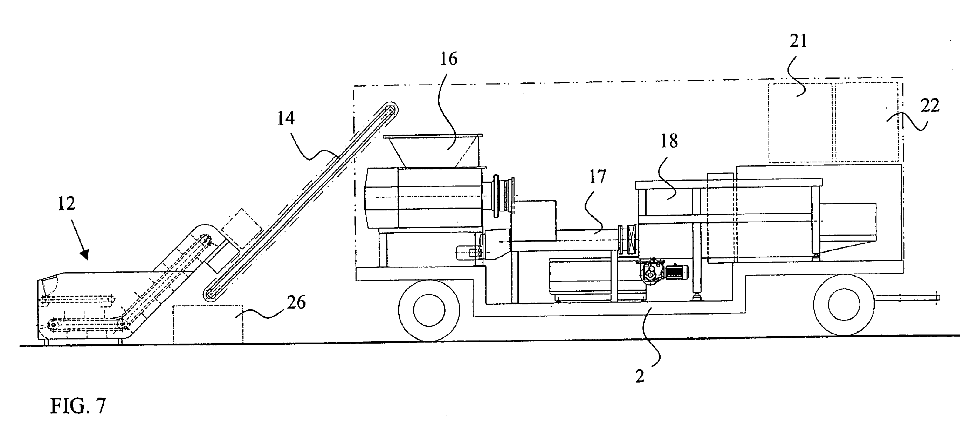

The temperature stop is arranged to take effect if an animal carcass with a too low body temperature is lead to the conveyor element 14 from the termination unit 12. If the apparatus 15 for measuring the temperature of animal carcasses observes a carcass with a too low body temperature on the conveyor element, such information should cause both the termination unit and the conveyor element to stop. In order to prevent too cold carcasses to be conveyed further to the ensilage process, the conveyor element is arranged to reverse in such a manner that the cold carcass is directed to a specific refuse container 26, which in accordance with Figure 7 and 13 is placed below the conveyor element. When the cold carcass is removed from the conveyor element the termination unit and the conveyor element resume the normal operations thereof.

When the operation of the termination unit 12 has been tested and adjusted the weighing appliance included in the mixer 18 is reset to zero, thus assuring the correct function thereof. When all this has been controlled, the effective use of the apparatus can be initiated.

Now the animals 13, hens in this particular embodiment, intended to be put to death are brought to the filling opening 25. From here the hens are lead into the gas-filled termination unit 12 at such a pace that a belt 27 has time to receive one hen at a time, cf. Figures 8 and 9. The capacity of the present embodiment of the apparatus is calculated to be about 83 birds/minute.

When the hens 13 have been placed on the belt 27, they are prevented to move forward. For this purpose the termination unit is provided with a paddle 28 that forms compartments on the belt and partition walls 29 in the roof structure of the termination unit. The partition walls are preferably provided with a flap function that allows the hens to be conveyed further on the belt. The belt is also provided with sides (not shown) so that the feet or feathers of the hens cannot be caught. The moving speed of the belt is thus calculated in such a manner that the hens stay thereon for at least 30 seconds. After such a time spent in the gas-filled environment the hens are completely unconscious.

The unconscious hens are then taken to the next conveyor 30, by means of which the birds are conveyed further so that they for 2 minutes constantly remain in an environment of concentrated CO₂ gas, cf. Figure 10. The termination unit is therefore constructed so that it forms a substantially air-tight space in the parts of the structure that lies below the filling opening 25. After having spent this time in the termination unit closed from the surroundings thereof, the hens are completely dead. After this, the animal carcasses fall down on the conveyor element 14 that carries them further to the grinder 16, cf. Figure 11.

When the hen carcasses 13 are resting on the conveyor element 14 they are subjected to temperature measuring in the apparatus 15 arranged thereto. The apparatus for measuring the temperature of the animal carcasses preferably comprises an apparatus that is able to read the temperature without necessarily touching the animal carcasses, which are being conveyed on the conveyor element. Thus, the apparatus may for instance be composed of an infrared meter reader mounted on top of or below the conveyor track. However, nothing prevents the apparatus from being composed of measuring means mounted in the actual conveyor element.

The measurement information obtained from such an apparatus 15 for measuring the temperature of animal carcasses is forwarded wirelessly in a manner known as such or through a fixed cable network to one or more manoeuvring units, which regulate the function of the termination unit 12 and the conveyor element 14.

By supervising the carcasses on the conveyor element 14 by means of the apparatus 15 for measuring the temperature of the animal carcasses, a control is continuously carried out that no animals that have died a natural death during a previous stage have been taken to the termination unit 12. Animals that are alive while placed in the termination unit, or shortly before that, have a higher body temperature than animals that have died during a previous stage. In order to avoid the fact that the animals, which have died a natural death, should bring impurities caused by bacteria attack in the dead carcass into the process the body temperature of the birds is controlled. If carcasses with a too low body temperature are detected, they are automatically removed from the process as described above.

If the ensilage apparatus 1 is for instance used to terminate and destroy animals on a disease infected farm the above described temperature measurement can naturally be switched off. All animal carcasses can thus be conveyed for the ultimate disposal thereof. The material obtained in this way can, however, be utilized as a raw material for making animal fodder.

The supply of CO₂ into the termination unit 12 is arranged to be automatically supervised. If it is observed that the gas-content falls below 50% the filling opening 25 is arranged to be locked and no more hens 13 can be taken into the unit before the CO₂ concentration has been adequately raised. In addition to the automatic system the unit naturally also comprises conventional visually readable CO₂ meters.

The hen carcasses 13 are conveyed by the conveyor element 14 to at least one grinder 16 in which the carcasses are ground into particles having a diameter of about 10 to 12 mm. The material ground in such a manner is arranged to be moved from the grinder to the mixer 18 using for i n-stance a screw conveyor 17. The mixer is provided with at least one weighing means for monitoring how much material the mixer has received. In order to obtain a most preferable ensilage material the conveyance of the material is arranged to be interrupted when the mixer has received approximately a third of the capacity thereof. After this the material is provided with chemicals from the acid containers 21 and 22 corresponding to the total capacity, whereupon the filling of the mixer is resumed. If the capacity of the mixer is for instance 3000 I, the filling of the mixer is interrupted when the amount of ground material in the mixer totals 1000 kg. Then the amount of acid required for the total amount of 3000 kg is added. The grinding and mixing of the material continues until 3000 kg is reached. The ensilage material that is produced in the mixer comprises therefore in addition to the animal carcass ground into small particles for instance sulphuric acid, formic acid or lactic acid bacteria and usually also benzoate in order to prevent the formation of mould in the material.

When the mixer 18 is filled, the feeding process is stopped, the blended pulp is ocularly controlled and the pH value is measured and corrected if required. When the pH value of the pulp is within the limits provided, the mixer starts to be emptied. Emptying is carried out through a second screw conveyor 20 arranged at the bottom of the mixer. The screw conveyor conveys the ensiled material to a pump 19 that moves the finished material to a storage, for instance to an external fodder tank 3. Pumping is preferably carried out to a tank truck that drives the ensiled material to a fodder kitchen where the material is kept for later use.

When all the contemplated hens 13 have been put to death the work is ended and the machines are washed inside, starting from the grinder 16, using high-pressure cleaning. The rests including material and water flushed from the machines during the cleaning process are also provided with acid like the conventional ensilage, and is used by the fodder kitchen.

Finally the termination unit 12 and the conveyor element 14 are lifted again into the trailer 3. The walls thereof are closed and the unit is brought to a cleaning and disinfection station in order to be cleaned and disi n-fected. After this the unit is again ready to be conveyed to the following customer to repeat the same procedure.

The specification and the Figures described therein are merely intended to illustrate the present solution concerning the structure of an ensilage apparatus. The solution is therefore not restricted only to the above or to the embodiments described in the appended claims, but a number of variations or alternative embodiments can be implemented within the scope of the idea described in the appended claims.

## Claims

1. An ensilage apparatus (1) comprising a framework (2), a grinder (16) for grinding animal carcasses into pieces, a conveyor (17) for conveying the ground material from the grinder further to a mixer (18) for processing the material ground into pieces, an acid container (21, 22), at least one acid pump (23) for conveying the acids from the respective acid containers to the mixer, and an arrangement (19, 20) for forwarding the processed material from the mixer to a storage, **characterized in that**
the ensilage apparatus (1) also comprises a termination unit (12), and
a conveyor element (14) for conveying animal carcasses (13) from the termination unit to be further processed, whereby
an apparatus (15) for recording the temperature of the animal carcasses is arranged on the conveyor element so that
the apparatus is arranged to regulate the operation of the conveyor element when the animal carcasses are conveyed on the conveyor element.

2. An ensilage apparatus (1) as claimed in claim 1, **character** - **ized** in that the apparatus (15) for measuring the temperature of the animal carcasses is arranged to read the temperature of the animal carcasses (13) without touching them.

3. An ensilage apparatus (1) as claimed in claim 1 or 2, **characterized in that** the apparatus (15) for measuring the temperature of the animal carcasses comprises measuring means mounted on the conveyor element (14).

4. An ensilage apparatus (1) as claimed in claim 1, **characterized in that** the apparatus (15) for measuring the temperature of the animal carcasses comprises an infrared meter reader.

5. An ensilage apparatus (1) as claimed in any one of claims 2 to 3, **characterized in that** the measuring information obtained from the apparatus (15) for measuring the temperature of the animal carcasses is arranged to be wirelessly forwarded to one or more manoeuvring units arranged to regulate the operation of the termination unit (12) and/or the conveyor element (14).

6. An ensilage apparatus (1) as claimed in any one of claims 2 to 3, **characterized in that** the measuring information obtained from the apparatus (15) for measuring the temperature of the animal carcasses is arranged to be wirelessly forwarded through a fixed cable network to one or more manoeuvring units arranged to regulate the operation of the termination unit (12) and/or the conveyor element (14).

7. An ensilage apparatus (1) as claimed in any one of the preceding claims, **characterized in that** the components arranged on the framework (2) is surrounded with side walls (6, 7), gable walls (8, 9) and a roof (10) of easily washable elements, whereby the structure forms a trailer (3), which can be completely closed during transportation.

8. An ensilage apparatus (1) as claimed in claim 7, **characterized in that** the termination unit (12) is movably arranged on the framework (2) in order to be moved from a transportation position in the trailer (3) to a service position outside the trailer.

9. An ensilage apparatus (1) as claimed in claim 7 or 8, **characterized in that** the conveyor element (14) is movably arranged on the framework (2) in order to be moved from the transportation position in the trailer (3) to the service position outside the trailer.

10. An ensilage apparatus (1) as claimed in any one of claims 7 to 9, **characterized in that** at least one side wall (6) can be lifted so as to function as a protective roof during the process and the rear gable (8) of the trailer (3) is also preferably completely openable to the side.

## Patentansprüche

1. Eine Silagevorrichtung (1), umfassend einen Rahmen (2), eine Mühle (16) zum Mahlen von Tierkörper in Stücke, eine Förderanlage (17) zum Fördern des Mahlgutes aus der Mühle (16) weiter in eine Mischvorrichtung (18) zum Verarbeiten des Mahlgutes in Stücke, einen Säurebehälter (21, 22), mindestens eine Säurepumpe (23) zum Fördern der Säuren aus dem jeweiligen Säurebehälter in die Mischvorrichtung (18), und eine Anordnung (19, 20) zur Weiterleitung des verarbeiteten Materials aus der Mischvorrichtung (18) zu einer Speichereinheit,
**dadurch gekennzeichnet, dass** die Silage Vorrichtung (1) auch eine Abschlusseinheit (12) umfasst, und eine Fördereinrichtung (14) zum Fördern von Tierkörpern (13) von der Abschlusseinheit um weiter bearbeitet zu werden, wobei eine Vorrichtung (15) zum Messen der Temperatur der Tierkörper derart auf der Fördereinrichtung (14) angeordnet ist, so dass die Vorrichtung (15) zur Regelung des Betriebs der Fördereinrichtung (14) angeordnet ist, wenn die Tierkörper auf dem Fördereinrichtung (14) gefördert werden.

2. Silagevorrichtung (1) nach Anspruch 1,
**dadurch gekennzeichnet, dass** die Vorrichtung (15) zum Messen der Temperatur der Tierkörper angeordnet ist, um die Temperatur der Tierkörper (13) berührungslos zu messen.

3. Silagevorrichtung (1) nach Anspruch 1 oder 2,
**dadurch gekennzeichnet, dass** die Vorrichtung (15) zum Messen der Temperatur der Tierkörper auf der Fördereinrichtung (14) angebrachte Messmittel umfasst.

4. Silagevorrichtung (1) nach Anspruch 1,
**dadurch gekennzeichnet, dass** die Vorrichtung (15) zum Messen der Temperatur der Tierkörper eine Infrarotmessvorrichtung umfasst.

5. Silagevorrichtung (1) nach einem der Ansprüche 2 bis 3,
**dadurch gekennzeichnet, dass** die aus der Vorrichtung (15) zum Messen der Temperatur der Tierkörper erhaltenen Messdaten zur drahtlosen Weiterleitung zu einem oder mehreren Manövriereinheiten weitergeleitet werden, welche zur Regulierung des Betriebs der Abschlusseinheit (12) und/oder des Förderelements (14) angeordnet sind.

6. Silagevorrichtung (1) nach einem der Ansprüche 2 bis 3,
**dadurch gekennzeichnet, dass** die aus der Vorrichtung (15) zum Messen der Temperatur der Tierkörper erhaltenen Messdaten zur drahtlosen Weiterleitung über ein festes Kabelnetz zu einem oder mehreren Manövriereinheiten weitergeleitet werden, welche zur Regulierung des Betriebs der Abschlusseinheit (12) und/oder des Förderelements (14) angeordnet sind.

7. Silagevorrichtung (1) nach einem der vorhergehenden Ansprüche,
**dadurch gekennzeichnet, dass** die auf dem Rahmen (2) angeordneten Komponenten von Seitenwänden (6, 7), Giebelwänden (8, 9) und einem Dach aus einfach zu waschenden Elementen umgeben (10) sind, wobei die Struktur einen Anhänger (3) bildet, der während des Transports vollständig geschlossen werden kann.

8. Silagevorrichtung (1) nach Anspruch 7,
**dadurch gekennzeichnet, dass** die Abschlusseinheit (12) beweglich auf dem Rahmen (2) angeordnet ist, um aus einer Transportposition im Anhänger (3) zu einer Betriebsposition außerhalb des Anhängers bewegt zu werden.

9. Silagevorrichtung (1) nach Anspruch 7 oder 8,
**dadurch gekennzeichnet, dass** das Förderelement (14) beweglich auf dem Rahmen (2) angeordnet ist, um aus einer Transportposition im Anhänger (3) zu einer Betriebsposition außerhalb des Anhängers bewegt zu werden.

10. Silagevorrichtung (1) nach einem der Ansprüche 7 bis 9,
**dadurch gekennzeichnet, dass** mindestens eine Seitenwand (6) anhebbar ist, um während des Prozesses als ein Schutzdach zu wirken und der hintere Giebel (8) des Anhängers (3) ebenfalls vorzugsweise vollständig zur Seite zu öffnen ist.

## Revendications

1. Appareil pour l'ensilage (1) comprenant un châssis (2), un broyeur (16) pour broyer des carcasses d'animaux en morceaux, un transporteur (17) pour transporter le matériau broyé en provenance du broyeur vers un mélangeur (18) afin de traiter le matériau broyé en morceaux, un récipient contenant de l'acide (21, 22), au moins une pompe à acide (23) pour transporter les acides des récipients contenant de l'acide respectifs vers le mélangeur, et un agencement (19, 20) pour acheminer le matériau traité du mélangeur vers un stockage, **caractérisé en ce que**
l'appareil pour l'ensilage (1) comprend également une unité de terminaison (12), et
un élément de transporteur (14) pour transporter des carcasses d'animaux (13) en provenance de l'unité de terminaison afin qu'elles soient davantage traitées, moyennant quoi
un appareil (15) pour enregistrer la température des carcasses d'animaux est agencé sur l'élément de transporteur de sorte que
l'appareil est agencé pour réguler le fonctionnement de l'élément de transporteur lorsque les carcasses d'animaux sont transportées sur l'élément de transporteur.

2. Appareil pour l'ensilage (1) selon la revendication 1, **caractérisé en ce que** l'appareil (15) pour mesurer la température des carcasses d'animaux est agencé pour lire la température des carcasses d'animaux (13) sans les toucher.

3. Appareil pour l'ensilage (1) selon la revendication 1 ou 2, **caractérisé en ce que** l'appareil (15) pour mesurer la température des carcasses d'animaux comprend un moyen de mesure monté sur l'élément de transporteur (14).

4. Appareil pour l'ensilage (1) selon la revendication 1, **caractérisé en ce que** l'appareil (15) pour mesurer la température des carcasses d'animaux comprend un lecteur de compteur infrarouge.

5. Appareil pour l'ensilage (1) selon l'une quelconque des revendications 2 et 3, **caractérisé en ce que** les informations de mesure obtenues par l'appareil (15) pour mesurer la température des carcasses d'animaux sont agencées pour être acheminées sans fil vers une ou plusieurs unités de manoeuvre agencées pour réguler le fonctionnement de l'unité de terminaison (12) et/ou de l'élément de transporteur (14).

6. Appareil pour l'ensilage (1) selon l'une quelconque des revendications 2 et 3, **caractérisé en ce que** les informations de mesure obtenues par l'appareil (15) pour mesurer la température des carcasses d'animaux sont agencées pour être acheminées sans fil via un réseau de câble fixe vers une ou plusieurs unités de manoeuvre agencées pour réguler le fonctionnement de l'unité de terminaison (12) et/ou de l'élément de transporteur(14).

7. Appareil pour l'ensilage (1) selon l'une quelconque des revendications précédentes, **caractérisé en ce que** les composants agencés sur le châssis (2) sont entourés par les parois latérales (6, 7), les parois de pignon (8, 9) et un toit (10) d'éléments facilement lavables, moyennant quoi la structure forme une remorque (3), qui peut être entièrement fermée pendant le transport.

8. Appareil pour l'ensilage (1) selon la revendication 7, **caractérisé en ce que** l'unité de terminaison (12) est agencée de façon mobile sur le châssis (2) afin d'être déplacée d'une position de transport dans la remorque (3) vers une position de service à l'extérieur de la remorque.

9. Appareil pour l'ensilage (1) selon la revendication 7 ou 8, **caractérisé en ce que** l'élément de transporteur (14) est agencé de façon mobile sur le châssis (2) afin d'être déplacé de la position de transport dans la remorque (3) vers la position de service à l'extérieure de la remorque.

10. Appareil pour l'ensilage (1) selon l'une quelconque des revendications 7 à 9, **caractérisé en ce qu'**au moins une paroi latérale (6) peut être soulevée de façon à faire office de toit protecteur pendant le traitement et le pignon arrière (8) de la remorque (3) peut également de préférence être complètement ouvert sur le côté.
